# EUROPEAN PATENT APPLICATION

(11) **EP 1 892 565 A1**
(43) Date of publication of application: **27.02.2008**
(21) Application number: 07111084.5
(22) Date of filing: 26.06.2007
(51) Int. Cl.: G02F 1/13357, H04N 9/31

(54) **Display device and backlight unit comprising a holographic optical element**

(30) Priority: 24.08.2006 KR 20060080687
(71) Applicant: Samsung Electronics Co., Ltd., Suwon-si 442-742 Gyeonggi-do (KR)
(72) Inventor: Lee, Jong-soo, Cheonan-si Chungcheongnam-do (KR); Cho, Kun-ho, Suwon-si Gyeonggi-do (KR)
(74) Representative: Robinson, Ian Michael

(57) **Abstract**

A display device is provided, including: a display panel (100); a hologram part (200) that is disposed behind the display panel (100); a light direction changing part (300), which may be formed of prisms and directs light so that it impinges perpendicularly on the hologram part (200); and a laser light source part (400) that is behind the hologram part (200) and provides light to the hologram part (200). No colour filter is required.

## Description

Apparatuses consistent with the present invention relate to a display device and a backlight unit, and more particularly, to a display device with no color filter layer, and a backlight unit for use in the display device.

Recently, flat display devices such as liquid crystal displays (LCDs), plasma display panels (PDPs), organic light emitting diodes (OLEDs), and the like have been developed to replace existing cathode ray tube (CRT) technology. Among these new developments, the range of applications of LCDs has spread to office automation equipment, audio/video equipment, and the like.

An LCD comprises a liquid crystal panel that comprises a thin film transistor (TFT) substrate on which TFTs are formed, a color filter substrate on which a color filter layer is formed, and a liquid crystal layer interposed between the substrates. Since a liquid crystal panel does not emit light itself, a backlight which emits light having red, blue and green components is located behind the TFT substrate.

The amount of light emitted from the backlight unit and transmitted through the color filter layer of the LCD is controlled depending on the alignment of liquid crystal molecules in the liquid crystal layer. However, some of the light emitted from the backlight unit is absorbed or reflected by the color filter layer, which results in high optical loss or low optical efficiency.

According to the present invention there is provided an apparatus and method as set forth in the appended claims. Preferred features of the invention will be apparent from the dependent claims, and the description which follows.

It is an exemplary aspect of the present invention to provide a display device with increased optical efficiency and good color reproducibility, and a backlight unit for use in the display device.

The foregoing and/or other aspects of the present invention can be achieved by providing a display device comprising: a display panel; a hologram part that is disposed behind the display panel; and a laser light source part that is behind the hologram part and provides light to the hologram part.

According to an aspect of the present invention, the display device further comprises a light direction changing part that is disposed between the laser light source part and the hologram part and adjusts a direction of light emitted from the laser light source part so that the light is incident at a predetermined angle with respect to a plane of the hologram part in order to obtain a high optical efficiency.

According to another aspect of the present invention, the light direction changing part adjusts the direction of light emitted from the laser light source part so that the light is incident substantially perpendicular to the plane of the hologram part in order that the incident light is sufficiently incident into the display panel.

According to another aspect of the present invention, the hologram part comprises: a hologram device that diffracts or condenses the incident light according to a wavelength of the incident light; and a condensing lens that condenses the light, which is output from the light direction changing part, and directs the condensed light to the hologram device.

According to another aspect of the present invention, the laser light source part comprises: a plurality of laser light sources that each emit light of a different color; a light mixing part that mixes the light emitted from the plurality of laser light sources; and a light projection part that projects white light, which is emitted from the light mixing part, onto the display panel.

According to another aspect of the present invention, the laser light sources comprise a red laser, a green laser and a blue laser for producing white light.

According to another aspect of the present invention, the laser light sources comprise a nonlinear light modulator using a laser diode having a high optical efficiency.

According to another aspect of the present invention, a full width half maximum of the light emitted from the laser light sources is less than about 5 nm.

According to another aspect of the present invention, the light projection part comprises a projection lens that spreads and projects the light, which is emitted from the laser light source part, onto the display panel.

According to another aspect of the present invention, the light projection part comprises an aspheric mirror, and alternatively may comprise a mirror other than the aspheric mirror.

According to another aspect of the present invention, the display device further comprises a light adjustment part that is disposed between the display panel and the hologram part and adjusts a characteristic of light that passes through the hologram part in order to improve the characteristic of light.

According to another aspect of the present invention, the display panel comprises a liquid crystal panel.

The foregoing and/or other exemplary aspects of the present invention can be also achieved by providing a backlight unit comprising: a hologram device that diffracts or condenses incident light according to a wavelength of the incident light; a laser light source part that is behind the hologram part and provides light to the hologram part; and a light direction changing part that is disposed between the laser light source part and the hologram device and adjusts a direction of light emitted from the laser light source part so that the light is incident at a predetermined angle with respect to a plane of the hologram device.

The above and/or other exemplary aspects of the present invention will become apparent and more readily appreciated from the following detailed description of the exemplary embodiments, taken in conjunction with the accompanying drawings of which:
Figure 1 is a side view of a display device according to a first exemplary embodiment of the present invention;
Figure 2 is a partially enlarged view of a portion A in Figure 1;
Figure 3 is a schematic view of a laser light source according to the first exemplary embodiment of the present invention;
Figure 4 is a schematic view of a laser light source according to a second exemplary embodiment of the present invention; and
Figure 5 is a sectional view of a display device according to a third exemplary embodiment of the present invention.

Reference will now be made in detail to exemplary embodiments of the present invention, examples of which are illustrated in the accompanying drawings, wherein like reference numerals refer to like elements throughout. The exemplary embodiments are described below so as to explain the present invention by referring to the figures. The like elements will be described for a first exemplary embodiment and may not be further described for other embodiments.

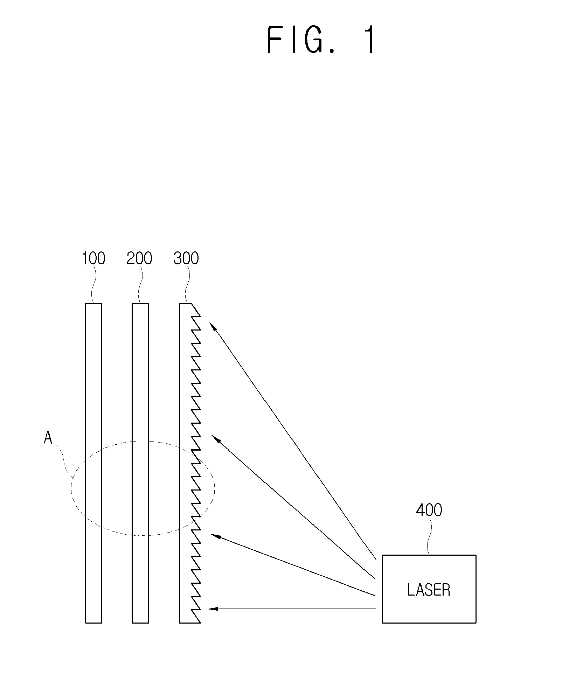

Hereinafter, a display according to a first embodiment of the present invention will be described with reference to Figures 1 to 3. As shown in Figure 1, a display device comprises a liquid crystal panel 100, a hologram part 200, a light direction changing part 300 and a laser light source part 400. In this embodiment, the display device comprises an LCD device that comprises the liquid crystal panel 100. However, it should be understood that the display device is not limited to an LCD device, but the spirit of the present invention can be applied to all display devices requiring an external light source for display of an image.

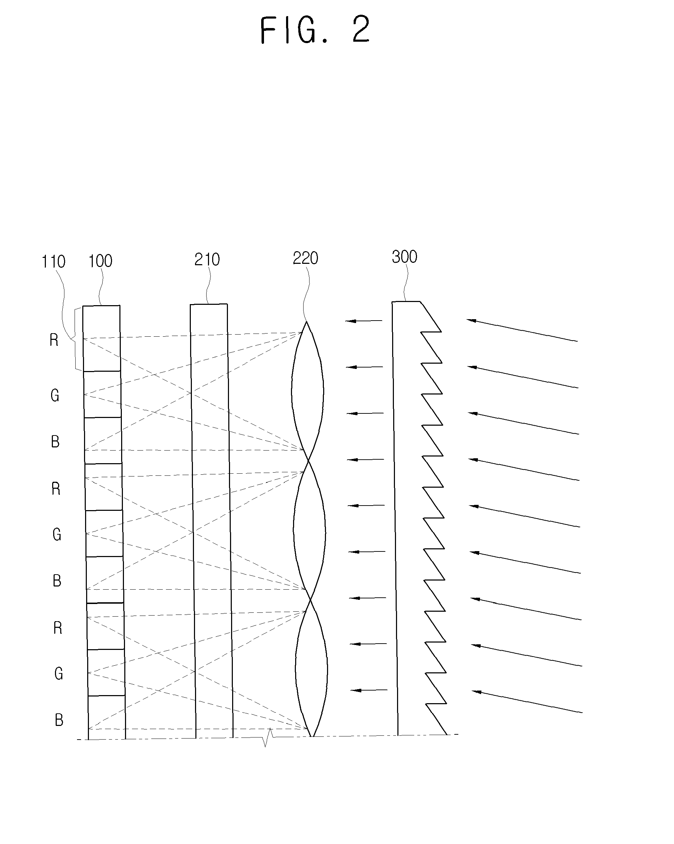

The liquid crystal panel 100 comprises a first substrate (not shown), a second substrate (not shown) facing the first substrate, and a liquid crystal layer interposed between the first and second substrates. On the first substrate are formed pixels 110 (shown in Figure 2), which are arranged in the form of a matrix, and thin film transistors that drive the pixels 110. On the second substrate are formed black matrixes that prevent light from being externally introduced into the thin film transistors. In this embodiment, a color filter layer is not formed on the second substrate, and the laser light source part 400 provides light having different color components to the pixels 110. The liquid crystal panel 100 shown in Figure 1 has a rectangular shape having long sides and short sides when viewed from the front. The liquid crystal panel 100 does not emit light itself. Accordingly, in order to form an image by controlling alignment of liquid crystal molecules in the liquid crystal layer, the liquid crystal panel 100 is provided with light through the hologram part 200 from the laser light source part 400 located behind the liquid crystal panel 100.

As shown in Figure 2, the hologram part 200 comprises a hologram device 210 and a condensing lens 220 which condenses light which is then incident into the hologram device 210. The hologram part 200 separates white light emitted from the laser light source part 400 into red, green and blue light to be provided to respective pixels 110 of the liquid crystal panel 100.

As an optical member that diffracts and condenses incident light according to its wavelength, the hologram device 210 has a diffraction effect and a lens effect. Typically, the hologram device 210 comprises diffraction grids formed on a base member. The hologram device 210 diffracts light by adjusting an incident angle of light incident into the diffraction grids, or the like. In this manner, the hologram device 210 separates and condenses incident white light to form a continuous optical spectral distribution on its focus plane. Accordingly, when the liquid crystal panel 100 is properly arranged near the focus plane, the red, green and blue light components can be incident into the pixels 110 of the liquid crystal panel 100. That is, the white light incident into the hologram device 210 is separated to have a continuous optical spectrum and the red, green and blue components are emitted through the pixels 110 of the liquid crystal panel 100. Accordingly, it is possible to display a color image without requiring a color filter layer.

The light direction changing part 300 is arranged between the hologram part 200 and the laser light source part 400 and directs the light, which is emitted from the laser light source part 400, to the hologram part 200 so that an incident angle of the light becomes uniform with respect to a plane of the hologram part 200. That is, without the light direction changing part 300, there is a high possibility that the light emitted from a region behind the liquid crystal panel 100 would not uniformly be incident into the hologram part 200. If the intensity of incident light is not uniform, the brightness of an image displayed on the liquid crystal panel 100 may become irregular. Accordingly, the light direction changing part 300 plays a role of directing the light, which is emitted from the laser light source part 400, to the hologram part 200 in order to maximize an optical efficiency. In this embodiment, the light direction changing part 300 adjusts the incident light so that the light travels substantially perpendicularly to the plane of the hologram part 200.

The light direction changing part 300 having such a function may be formed by one of various optical members, for example, a Fresnel lens having prisms having different slopes and formed on a base member.

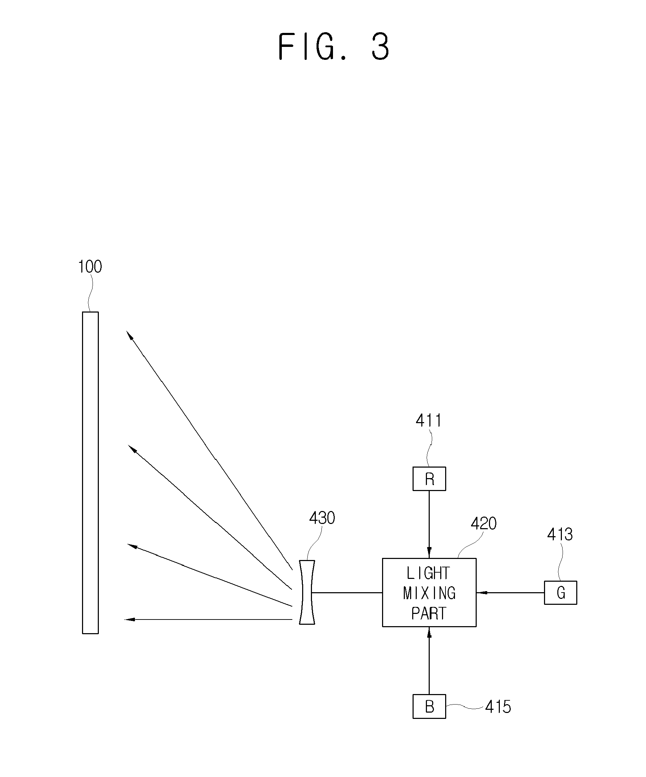

In this embodiment, as shown in Figure 3, the laser light source part 400 comprises a plurality of laser light sources 411, 413 and 415, a light mixing part 420 that mixes light incident from the plurality of laser light sources 411, 413 and 415, and a light projecting part 430 that projects light, which is output from the light mixing part 420, onto the liquid crystal panel 100. In this embodiment, the light projecting part 430 comprises one or more projection lenses.

The plurality of laser light sources 411, 413 and 415 comprises a red light laser 411 emitting red light having a wavelength band of about 620 to 690 nm, a green light laser 413 emitting green light having a wavelength band of about 500 to 570 nm, and a blue light laser 415 emitting blue light having a wavelength band of about 430 to 490 nm. In addition, in this embodiment, a full width half maximum of the light emitted from the laser light sources 411, 413 and 415 is less than about 5 nm. White light is produced by a combination of the red light laser 411, the green light laser 413 and the blue light laser 415 having such a narrow full width half maximum. By passing the white light through the hologram device 210, it is possible to obtain discontinuous red, green and blue light components. That is, it is possible to obtain discontinuous different colors without arranging red, green and blue components among light having all continuous wavelength bands on the pixel 110. Accordingly, using the laser light sources 411 and 413 and 415 of different colors having different wavelengths and a narrow full width half maximum allows easier color separation in the hologram device 210. In this embodiment, to meet the above conditions, it is preferable, but not necessary, that the laser light sources 411, 413 and 415 may comprise a nonlinear light modulator using a laser diode or a solid state laser. Optical pumping using a laser diode or a solid state laser shows an optical output better than optical pumping using a lamp.

In addition, since the laser light sources 411, 413 and 415 typically output polarized light, optical loss may be reduced when the polarized light passes through polarizing plates attached to both sides of the liquid crystal panel 100. It is known that polarization state of white light emitted from the laser light sources 411, 413 and 415 may be varied while passing through the polarizing plates and the liquid crystal layer and some of the light that does not pass through the polarizing plates and the liquid crystal layer may be lost. The optical loss due to such polarization variation may be reduced by using laser sources emitting polarized white light.

In order to avoid an optical loss due to a color filter layer, there has been a related art method using a sequential driving method that red, green and blue lights are sequentially provided to the liquid crystal panel 100 without a color filer layer. In this case, however, since light of different colors has different emission timings, the red, green and blue lights may not be properly mixed. Like this, the related art sequential driving method has a drawback in that overall white color representation is difficult due to separation of colors and color reproducibility is poor. As in this embodiment, when lasers are used as light sources, the above-mentioned problem may be prevented since light of different colors can be simultaneously provided to the liquid crystal panel 100 without using a color filter.

The color of the light emitted from the laser light sources 411, 413 and 415 is not limited to red, green and blue, but may comprise cyan, magenta and yellow which can be produced by adjusting a laser wavelength.

The light mixing part 420 mixes the light emitted from the laser light sources 411, 413 and 415 to white light. The light emitted from the laser light sources 411, 413 and 415 is not separately provided to the liquid crystal panel 100, but is mixed in the light mixing part 420 to white light and then is projected through the projection lens 430. The light mixing part 420 may comprise a light guide tube with a plurality of reflecting plates or mirrors arranged therein. These reflecting plates or mirrors guide light emitted in different directions to a direction in which the projection lens 430 is located. In order to reduce an optical loss caused by light absorption in an inner wall of the light mixing part 420, a reflecting mirror may be arranged on the inner wall of the light mixing part 420.

The projection lens 430 spreads light incident from the light mixing part 420 and projects the spread light onto the liquid crystal panel 100. As shown in FIG. 3, the projection lens 430 may be provided as a concave lens that disperses and spreads the incident light to the front, or alternatively may be designed in various ways using a plurality of lenses such as aspheric lenses. Such a light projection part may typically employ a projection lens system used for a projection system.

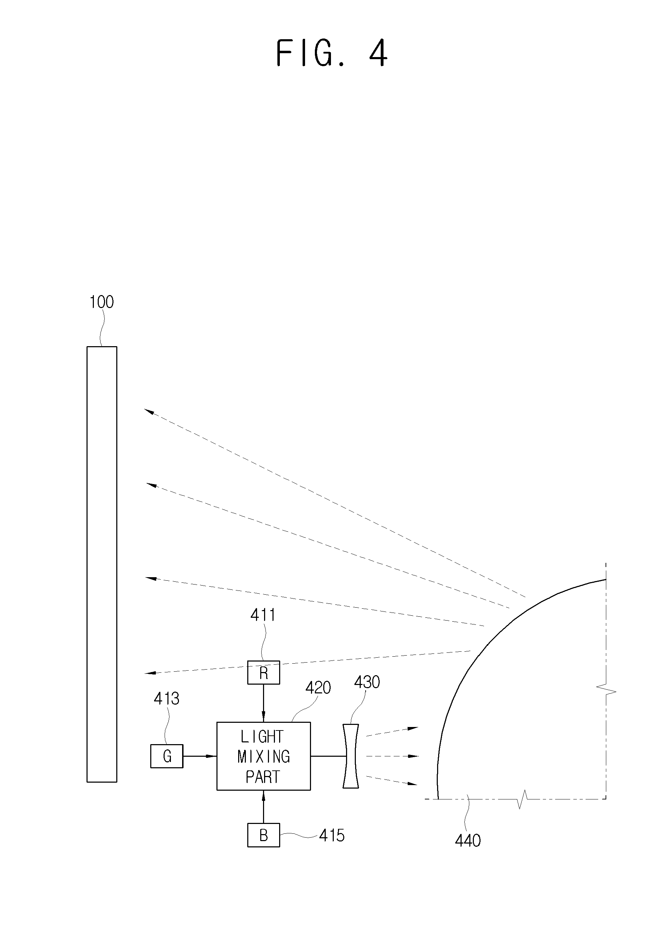

Figure 4 is a schematic view of a laser light source part according to a second exemplary embodiment of the present invention. As shown in Figure 4, in the second exemplary embodiment, a light projection part comprises an aspheric mirror 440 in addition to the projection lens 430. The laser light sources 411, 413 and 415 and the light mixing part 420 are arranged adjacent to the liquid crystal panel at a lower portion behind the liquid crystal panel 100. Light emitted from the light mixing part 420 is incident onto the aspheric mirror 440 through the projection lens 430. The incident light is projected onto the liquid crystal panel 100 by the aspheric mirror 440. The aspheric mirror 440 plays a role of substantially spreading and projecting the white light emitted from the light mixing part 420 onto the liquid crystal panel 100. As described above, since the laser light sources 411, 413 and 415 and the light mixing part 420 are arranged adjacent to the liquid crystal panel 100, a modulation process is facilitated, and accordingly a total volume of the display device can be reduced. Although the aspheric mirror 440 is shown to be significantly large in Figure 4 for the sake of convenience of description, the aspheric mirror 440 may have an appropriate size in consideration of the overall size of the display device, and further, the overall size of the display device may be reduced by arranging a plurality of small aspheric mirrors 440.

The configuration of the light projection part is not limited to those light projection parts shown in the first and second embodiments. For example, the light projection part may be configured by only an aspheric mirror or a plurality of lenses, or may be designed in various ways in consideration of the size of the display device and a distance between the light projection part and the liquid crystal panel 100.

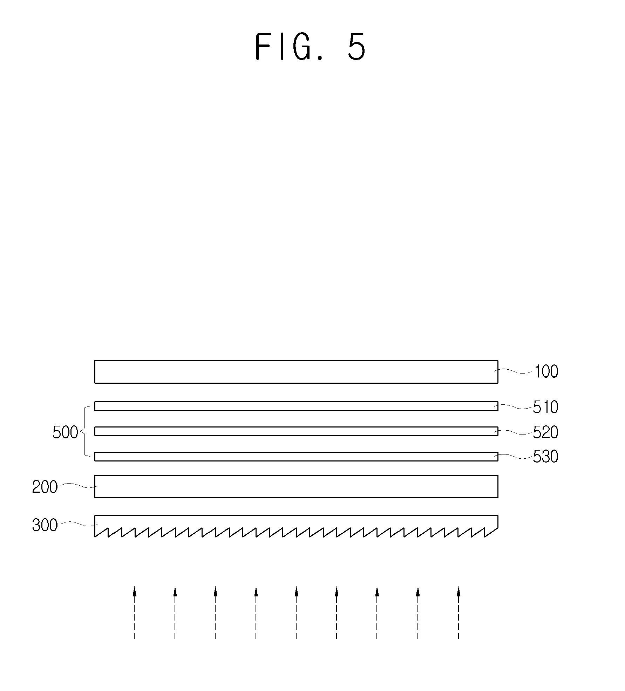

Figure 5 is a sectional view of a display device according to a third exemplary embodiment of the present invention. As shown in Figure 5, in this embodiment, a display device further comprises a light adjustment part 500 that improves a characteristic of light that passes through the hologram part 200. The light adjustment part 500 is disposed between the liquid crystal panel 100 and the hologram part 200 and comprises a plurality of films 510, 520 and 530 for improvement of the characteristic of light. Specifically, the plurality of films 510, 520 and 530 may comprise a diffusion plate 530, a prism film 520 and a protective film 510.

The diffusion plate 530 comprises a base plate and a coating layer including beads formed on the base plate. The diffusion plate 530 makes the luminescence of light uniform by diffusing light incident thereon through the hologram part 200.

The prism film 520 has a top surface on which triangular prisms are arranged in a regular pattern. The prism film 520 condenses light, which is diffused by the diffusion plate 530, in a direction perpendicular to a plane of the liquid crystal panel 100. Two sheets of prism films 520 are typically used to condense light, each of which has micro prisms formed thereon at a predetermined angle. Most of light passed through the prism film 520 travels vertically to provide a uniform luminescence distribution on the liquid crystal panel 100. A reflection polarizing film may be used along with the prism film 520, or only the reflection polarizing film may be used without the prism film 520.

The protective film 510, which is located on the prism film 520, protects the prism film 520, which is susceptible to scratches.

The plurality of films 510, 520 and 530 may be selectively provided or may be omitted in some cases. The kind of film may be selected in consideration of a user' need and a characteristic of a light source, and further, any known films may be used for light compensation.

As described above, according to the present invention, an optical efficiency is increased by using a hologram device 210 instead of a color filter, and a high light output can be obtained by using the laser light sources 411, 413 and 415 including a laser diode or the like for supplying white light. In addition, since light emitted from the laser light sources 411, 413 and 415 is separated into red, green and blue by the hologram device 210, an optical loss, which may be caused by transmission through other media, can be reduced.

As apparent from the above description, the present invention may provide a display device with increased optical efficiency and good color reproducibility, and a backlight unit for use in the display device.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A display device comprising:
a display panel (100);
a hologram part (200) that is disposed behind the display panel (100); and
a laser light source part (400) that is disposed behind the hologram part (200) and provides light to the hologram part (200).

2. The display device according to claim 1, further comprising a light direction changing part (300) that is disposed between the laser light source part (400) and the hologram part (200) and adjusts a direction of light emitted from the laser light source part (400) so that the light is incident at a predetermined angle with respect to a plane of the hologram part (200).

3. The display device according to claim 2, wherein the light direction changing part (300) adjusts the direction of light emitted from the laser light source part (400) to be substantially perpendicular to the plane of the hologram part (200).

4. The display device according to claim 3, wherein the hologram part (200) comprises:
a hologram device (210) that diffracts or condenses incident light according to a wavelength of the incident light; and
a condensing lens (220) that condenses light from the light direction changing part (300) and directs the condensed light to the hologram device (210).

5. The display device according to claim 4, wherein the laser light source part (400) comprises:
a plurality of laser light sources (411, 413, 415) that each emit light of a different color;
a light mixing part (420) that mixes the light emitted from the plurality of laser light sources (411, 413, 415); and
a light projection part (430) that projects white light, which is emitted from the light mixing part (420), onto the display panel (100).

6. The display device according to claim 5, wherein the laser light sources comprise a red laser (411), a green laser (413) and a blue laser (415).

7. The display device according to claim 6, wherein the laser light sources comprise one of a nonlinear light modulator using a laser diode and a solid state laser.

8. The display device according to claim 7, wherein a full width half maximum of the light emitted from the laser light sources is less than about 5 nm.

9. The display device according to claim 5, wherein the light projection part (430) comprises a projection lens (430).

10. The display device according to claim 5, wherein the light projection part (430) comprises an aspheric mirror (440).

11. The display device according to claim 10, wherein the light projection part (430) further comprises a projection lens (430).

12. The display device according to any preceding claim, further comprising a light adjustment part (500) that is disposed between the display panel (100) and the hologram part (200) and adjusts a characteristic of light that passes through the hologram part (200).

13. The display device according to any preceding claim, wherein the display panel (100) comprises a liquid crystal panel.

14. A backlight unit comprising:
a hologram device (210) that diffracts or condenses incident light according to a wavelength of the incident light;
a laser light source part (400) that is disposed behind the hologram part (200) and provides light to the hologram part (200); and
a light direction changing part (300) that is disposed between the laser light source part (400) and the hologram device (210) and adjusts a direction of light emitted from the laser light source part (400) so that light is incident at a predetermined angle with respect to a plane of the hologram device (210).

15. The backlight unit according to claim 14, wherein the laser light source part (400) comprises:
a plurality of laser light sources (411, 413, 415) that each emit light of a different color;
a light mixing part (420) that mixes the light emitted from the plurality of laser light sources (411, 413, 415); and
a light projection part (430) that projects white light, which is emitted from the light mixing part (420), onto the hologram device (210).

16. The backlight unit according to claim 15, wherein the laser light sources comprise a red laser (411), a green laser (413) and a blue laser (415).

17. The backlight unit according to claim 15 or 16, wherein the laser light sources comprise a nonlinear light modulator using a laser diode.

18. The backlight unit according to claim 17, wherein a full width half maximum of the light emitted from the laser light sources is less than about 5 nm.
